# EUROPEAN PATENT SPECIFICATION

(11) **EP 4 458 540 B1**
(45) Date of publication and mention of the grant of the patent: **12.11.2025**
(21) Application number: 23171554.1
(22) Date of filing: 04.05.2023
(51) Int. Cl.: B28B 1/00, B28B 17/00, B28C 7/00, B33Y 10/00, B33Y 30/00, B33Y 40/10, B33Y 50/02

(54) **METHOD AND SYSTEM FOR PRODUCING 3D-OBJECT FROM CURABLE BINDER COMPOSITION WITH ADDITIVE MANUFACTURING PROCESS INVOLVING COOLING, AND RELEVANT COMPUTER PROGRAM**
VERFAHREN UND SYSTEM ZUR HERSTELLUNG EINES 3D-OBJEKTS AUS EINER AUSHÄRTBAREN BINDEMITTELZUSAMMENSETZUNG DURCH EINEN ADDITIVEN FERTIGUNGSPROZESS MIT KÜHLUNG, UND RELEVANTES COMPUTERPROGRAMM
PROCÉDÉ ET SYSTÈME DE FABRICATION D'UN OBJET 3D D'UNE COMPOSITION DE LIANT DURCISSABLE PAR UN PROCÉDÉ DE FABRICATION ADDITIVE AVEC REFROIDISSEMENT, ET PROGRAMME INFORMATIQUE PERTINENT

(43) Date of publication of application: 06.11.2024
(73) Proprietor: Sika Technology AG, 6340 Baar (CH)
(72) Inventor: BOURQUIN, Raphael, 8617 Mönchaltorf (CH); KUHN, Patrik, 8046 Zürich (CH); LOOTENS, Didier, 6010 Kriens (CH); MUELLER, Severin, 8840 Einsiedeln (CH)
(74) Representative: Sika Patent Attorneys

(56) References cited:
- WO-A1-2018/081310
- WO-A2-2020/055870
- CN-A- 112 476 703
- CN-A- 113 580 318
- US-A1- 2022 347 739

## Description

### Technical field

The invention relates to a method and a system for producing a three-dimensional object from a curable mineral binder composition, with an additive manufacturing process.

### Background art

In construction industry, curable mineral binder compositions are widely used for various applications. Examples of such compositions are mortar, concrete, grout, or screed compositions.

Attempts have been made for some time to produce geometrically demanding construction elements using additive manufacturing processes. The term "additive manufacturing process" or "additive production" refers to processes in which a spatial object or a molded body is produced by the targeted spatial deposition, application and/or solidification of material.

The deposition, application and/or consolidation of the material, for example the curable binder composition, is carried out in particular on the basis of a data model of the object to be generated and in particular layer-by-layer. Thus, in the additive manufacturing process, each object is typically produced from one or more layers. Usually, a formless material (for example liquids, powders, granulates, etc.) and/or a form-neutral material (for example tapes, wires) is used to manufacture an object, which is subjected in particular to chemical and/or physical processes (for example melting, polymerizing, sintering, curing). Additive manufacturing processes are also referred to as "generative manufacturing processes" or "3D printing", among others.

Additive manufacturing in the construction sector is quickly developing and projects involving this technology are becoming more and more ambitious. However, additive manufacturing is based on a rather difficult interplay between the material to be applied, for example a curable binder composition, and the application device, for example a 3D printing device. However, the physical and chemical properties of curable binder compositions, such as for example concrete mixtures, make the generative production of concrete elements very difficult. In a typical 3D concrete printing process, a dry mortar is first mixed with water and admixtures, typically containing polymers and additives, such as plasticizers, using a continuous mixing device to provide a homogeneously mixed mortar composition having a constant quality and properties. The mortar composition is pumped through a supply line having a length of several meters to a printing head and applied layer-by-layer to form a three-dimensional object. In a two-component 3D printing, the process comprises a further step of mixing the mortar composition with one or more additives, especially an accelerator, in the printing head.

Typically, high performance mortars containing low amount of water are used as the curable binder compositions in 3D printing of cementitious structures. Due to the low amount of water in the mortar, obtaining a homogeneously mixed mixture typically requires that the mixing is conducted as a high intensity mixing process, where the motor of the continuous mixing device can reach speeds of up to 2000 rpm. Due to the high intensity of the mixing step and the friction, especially between solid particles of the mortar and moving parts of the continuous mixer, a lot of heat energy is generated inside the mixer. **It** has been found out that the temperature of the mortar composition can increase as much as by 10 °C during a mixing process, even if the lead time of the continuous mixer was in the range of seconds rather than minutes. Moreover, the pumping of the mixed mortar composition could lead to another temperature increase, which may be, depending on the type of the pump and length and dimensions of the supply line, even more significant than the temperature increase during the mixing step. Finally, in a two-component printing process, the temperature of the mortar composition will significantly increase in the printing head due to the frictional heat generated in the mixing step and also due to exothermic chemical reactions resulting from mixing of the mortar composition with the hardening curing accelerators.

If the temperature is allowed to freely fluctuate during the additive manufacturing process, the mortar composition could reach temperatures that have significant adverse effects on the quality of the 3D printed object. For example, high temperature of the mortar composition alters the type and/or speed of chemical reactions of cement resulting in products having inferior mechanical properties or even blocking of the printing head. Furthermore, at higher temperatures more water is evaporated after the mortar composition has been extruded from the printing head that can result in weaker bonding between the applied layers. High temperatures of the mortar composition also make it more difficult to control the mixing and pumping steps occurring upstream of the printing head. Furthermore, the viscosity and reactivity of the mortar composition, and efficiency of the plasticizer are highly dependent on the temperature of the mortar composition. It would thus be highly desirable to be able to control the temperature of the mortar composition before it reaches the printing head and/or in the printing head.

WO 2020/260375 A1 (Saint-Gobain Weber) describes a method suitable for 3D printing of elements comprising hydraulic binder and aggregates. Thereby, a dry mortar composition comprising hydraulic binder and aggregates is mixed with water to form a wet mortar, and the wet mortar is then pumped and conveyed towards an outlet. During the conveying, at least two physical properties of the wet mortar are measured online with a sensor, whereby said physical properties include viscosity and at least one of flow rate and density. Furthermore, temperature of the wet mortar can be simultaneously measured with density, flow rate, and viscosity using the same sensor. The system for implementing the disclosed method comprises a mixing device adapted to mix a dry mortar composition comprising hydraulic binders and aggregates with water, an outlet, a pumping device adapted to pump and convey the wet mortar towards the outlet, and at least one sensor adapted to measure on-line at least two physical properties of the wet mortar. The system comprises a controller configured to adjust the mixing ratio between the water and the dry mortar depending on the value of at least one of said at least two physical properties. However, the disclosed system does not contain means to adjust temperature of the wet mortar.

Thus, there is a need for new and improved solutions that overcome the aforementioned disadvantages as far as possible.

It is known to heat a wet composition during a 3D printing process, for example from CN 113580318 A (Univ Hebei Technology, Yaobo Special Cement Tech), US 2022/347739 A1 (Nantes Ecole Centrale), and WO 2020/055870 A2 (3DFortify Inc). It is also known from CN 112476703 A (Univ Northeastern) that a feeding system of a 3D printer can be cooled. This latter document discloses a system according to the preamble of claim 6.

### Disclosure of the invention

It is an object of the present invention to provide improved solutions for preparing three-dimensional objects from curable binder compositions, especially curable mineral binder compositions, with an additive manufacturing process. In particular, a constant quality and properties of the curable binder composition is to be achieved during the whole process. Furthermore, blocking of the curable binder composition in the printing head should be avoided as good as possible.

Surprisingly, it was found that these objects can be achieved with the method according to independent claim 1.

As it turned out, on-line measurement and/or adjustment of the temperature of the curable binder composition in the setting state before it reaches the printing head and/or in the printing head, i.e., in the mixing unit and/or in the supply line and/or in the printing head, allows a very efficient control of the quality and properties of the curable mineral binder composition, which results in improved quality the 3D printed object. Especially, the temperature of the curable binder composition can be adjusted using commonly available temperature control means, including temperature sensors, heat exchanger devices, and control units.

Especially, knowing the measured temperature of the curable binder composition in the printing head in real time is highly beneficial because deviations from target values can be identified and controlling actions can be initiated to keep the temperature within the range of target values and/or stopping the manufacturing process. Deviations may for example be caused by fluctuations of raw material quality and/or temperature, by operator errors and/or by temperature of the surroundings.

Overall, the inventive method is useful to produce high quality printed three-dimensional objects. Especially, it drastically increases the safety of the additive manufacturing process because any issue with regard to temperature of the curable binder composition flowing through the process can be instantaneously detected and directly be solved. In case of potential danger, it is for example possible to stop the application before the printed object collapses due to too weak bonding between the applied layers or before the printing head is blocked because, for example, of too high viscosity of the curable binder composition resulting from altered curing reactions.

Compared to known solutions based on the measurement of physical parameters, such as density and viscosity, of the curable binder composition, the inventive approach has turned out to provide an improved solution to control the process and the quality the 3D printed object.

Further aspects are described below and are subject of the further independent claims. Particularly preferred embodiments are outlined throughout the description and the dependent claims.

### Ways of carrying out the invention

A first aspect of the present invention is directed to a method for producing a three-dimensional object from a curable binder composition, especially curable mineral binder composition, with an additive manufacturing process, comprising the steps of:
- Producing the curable binder composition in the setting state, preferably by mixing the components of the curable binder composition in a mixing unit (10),
- Conveying the curable binder composition in the setting state via a supply line (12) to a printing head (3) movable in at least one spatial direction,
- Applying the curable binder composition in the setting state by means of the printing head (3), wherein the curable binder composition is preferably applied layer-by-layer, to form the three-dimensional object,
- Determining a temperature of the curable binder composition in the mixing unit (10) and/or in the supply line (12) and/or in the printing head (3),
- Adjusting the temperature of the curable binder composition in the mixing unit (10) by cooling using a heat exchanger device (13.1) arranged to the mixing unit (10) and/or
- Adjusting the temperature of at least one of the components of the curable binder composition before adding it into the mixing unit (10), wherein the curable binder composition comprises a first component comprising mineral binder and aggregate, a second component comprising water, and optionally at least one third component comprising one or more additive(s), wherein the temperature of at least one of the second and third component is adjusted before adding it/them to the mixing unit (10) by cooling using a heat exchanger device (13.3, 13.4),
- Optionally adding an additive for controlling the chemical and/or physical properties of the setting curable binder composition to the setting curable binder composition in the printing head (3) and/or in the supply line (12), and
- Optionally adjusting the temperature of the additive before adding it to the printing head (3) and/or the supply line (12).

A "curable binder composition" stands for a material which is typically flowable or liquefiable and which, after mixing, for example by the addition of mixing water, or by the mixing of components or by heating, can cure by a chemical reaction to form a solid. For example, these are reaction resins (which are not claimed), mineral binders, mineral binder compositions or mixtures thereof.

In particular, reactive resins are liquid or liquefiable synthetic resins that cure by polymerization or polyaddition to form duromers. For example, unsaturated polyester resins, vinyl ester resins, acrylic resins, epoxy resins, polyurethane resins and/or silicone resins can be used.

The curable binder composition is, according to the invention, a curable mineral binder composition.

The term "mineral binder" refers in particular to a binder which reacts in the presence of water in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a non-hydraulic binder (e.g. gypsum or white lime).

A "mineral binder composition" is accordingly a composition containing at least one mineral binder. In particular, it contains the binder, aggregates and optionally one or more additives. Aggregates may be, for example, aggregates, gravel, sand (in natural and/or processed (e.g. crushed) form) and/or filler. The mineral binder composition is in particular a fluid binder composition mixed with mixing water.

In particular, the mineral binder or the binder composition contains a hydraulic binder, preferably cement. Particularly preferred is a cement with a cement clinker content of ≥ 35% by weight, in particular the cement is of type CEM I, II, III, IV or V, preferably cement of type CEM I (according to standard EN 197-1). A proportion of the hydraulic binder in the total mineral binder is advantageously at least 5% by weight, in particular at least 20% by weight, preferably at least 35% by weight, in particular at least 65% by weight. According to a further advantageous embodiment, at least 95% by weight of the mineral binder consists of hydraulic binder, in particular cement clinker.

However, it can also be advantageous if the binder composition comprises other binders in addition to or instead of a hydraulic binder. These are in particular latent hydraulic binders and/or pozzolanic binders. Suitable latent hydraulic and/or pozzolanic binders are, for example, slag, granulated blast furnace slag, fly ash and/or silica fume. Likewise, the binder composition may include inert materials such as limestone powder, quartz powder and/or pigments. In an advantageous embodiment, the mineral binder contains 5 - 95% by weight, in particular 5 - 65% by weight, more specifically 15 - 35% by weight, of latent hydraulic and/or pozzolanic binders.

The expression "the curable binder composition in the setting state" in particular means that the curable binder composition is in a condition in which the setting of the binder in the curable binder composition has started but is not yet complete.

In case of a mineral binder compositions, the compositions are in the setting state after mixing the mineral binder and optionally further components, such as e.g. aggregates, with the mixing water.

The three-dimensional object produced by the process according to the invention can have almost any desired shape and can, for example, be a finished part for a structure, e.g. for a building, a masonry structure and/or a bridge.

The additive manufacturing process according to the present invention is in particular a generative free space process. This means that the three-dimensional object is formed layer by layer, namely by applying curable material only at those points where the three-dimensional object is to be formed. In the case of overhangs and/or cavities, a support structure can optionally be provided. In contrast, in powder bedding or liquid processes, for example, the entire space is typically filled, and the material is then selectively solidified at the desired locations.

Free-space processes have proved to be particularly advantageous in connection with the production of three-dimensional object from curable binder composition.

Preferably, the curable binder composition is produced in the setting state by mixing of the components of the curable binder composition in a mixing unit. Most preferably, the curable binder composition is continuously produced in the setting state, especially during the application of the curable binder composition.

For conveying the curable binder composition in the setting state via a supply line to a printing head, the additive manufacturing device comprises in particular a conveying device, particularly a pump, with which the curable binder composition can be conveyed to the printing head via the supply line.

The supply line can have a length of for example 50 cm to 100 m, especially 2 m to 50 m.

For applying the curable binder composition in the setting state, the printing head is in particular controlled on the basis of a structural data model of the three dimensional object. The structural data model may be stored in a memory module of a control unit of the additive manufacturing device.

Preferably, determining a temperature of the curable binder composition in the mixing unit and/or in the supply line and/or in the printing head, takes place simultaneously with the production of the curable binder composition, the conveying of the curable binder composition in the setting state via the supply line, and the application of the curable binder composition. This allows for a real time measurement and adjustment of the temperatures. Particularly, the real time measurement of temperatures enables automatic adjustment of the temperature of the curable binder composition in the printing head by controlling the temperature of the curable binder composition in the mixing unit and/or the supply line. The temperature control can be conducted manually and/or automatically using a feedback controller.

The expression "adjusting temperature of a composition" means in the context of the present invention that temperature of the composition is actively kept within a range of target values by using heat exchanging means, such as one of more heat exchanger devices.

Generally, adjusting the temperature of a composition can be conducted directly and/or indirectly. For example, a heat exchanger can be used to adjust the temperature by cooling of at least one of the second and third component of the curable binder composition before adding it/them to the mixing unit to provide the curable binder composition in the setting state. Alternatively or in addition, the temperature of the curable binder composition in the setting state can be directly adjusted by cooling using a heat exchanger device arranged to the mixing unit.

The term "heat exchanger device" refers in the present disclosure to devices that are used to exchange heat between same or different forms of material through conduction, convection, or radiation. Suitable heat exchanger devices include, for example, heat exchangers that exchange heat between two fluids having different temperatures without physical mixing of the fluids as well as coolers and heaters comprising, for example, a heating/cooling element configured to exchange heat between the element and the surrounding fluid.

Particularly, a heat exchanger device typically contains temperature sensors and control units that enable automatic control of a process variable, such as the temperature of the fluid to be heated/cooled, by adjusting one or more manipulated variables, such as the flow rate and/or inlet temperature of the heat exchanging medium.

Main types of heat exchangers include double-tube heat exchanger, shell-and-tube heat exchanger, and plate heat exchanger. Heat exchangers can also be classified based on their flow arrangement into parallel-flow, counter-flow, and cross-flow heat exchangers.

A double-tube heat exchanger consists of two concentric tubes where one fluid flows though the inner tube and the other fluid flows into the annular gap between the inner and outer tubes. A shell-and-tube heat exchanger consists of a shell, typically a large pressure vessel, and a bundle of tubes inside it. One fluid runs through the tubes, and another fluid flows over the tubes. A plate heat exchanger is a type of heat exchanger that uses metal plates to transfer heat between two fluids.

Further suitable heat exchanger devices include thermoelectric coolers and heaters that use the Peltier effect to create a heat flux at the junction of two different types of materials. Such devices are also known as Peltier devices, Peltier heat pumps, solid state refrigerators, or thermoelectric coolers.

The temperature of the curable binder composition in the mixing unit is adjustedby cooling, using a heat exchanger device arranged to the mixing unit.

The heat exchanger device arranged to the mixing unit preferably comprises a jacket, preferably a metallic jacket, surrounding at least a portion of the mixing unit. The metallic jacket preferably comprises inner and outer walls enclosing a plurality of canals for a heat exchanging medium. The jacket furthermore comprises at least one inlet and outlet for the heat exchanging medium, for example a liquid. The jacket may further comprise one or more fins arranged on the inner surface of the jacket to increase the heat exchanging area between the heat exchanging medium and the mixing unit.

Not claimed are embodiments where the curable binder composition in the setting state is supplied via a supply line to the printing head, preferably using a pump, and a temperature of the curable binder composition in the supply line, preferably downstream of the pump, is adjusted, preferably by cooling, using a heat exchanger device arranged to the supply line. There are no particular restrictions for the type of the heat exchanger device arranged to the supply line. According to a preferred implementation, the heat exchanger device is a shell and tube heat exchanger or a tubular heat exchanger, preferably a double tube heat exchange, preferably having a length of 0.25 - 5 m, more preferably 0.5 - 3 m.

In case of a double tube heat exchanger, the outer tube has an outer diameter of, for example, 40 - 100 mm, especially 45 - 85 mm and/or the inner tube has an inner diameter of, for example, 20 - 65 mm, especially 25 - 50 mm.

The heat exchanger device is preferably arranged in the vicinity of the pump, wherein the inlet of the heat exchanger device for the curable binder composition is preferably no further than 5 m, more preferably not more than 2.5 m, even more preferably not more than 1.5 m, from the outlet of the pump.

According to the invention, the curable binder composition comprises a first component comprising mineral binder and aggregate, a second component comprising water, and optionally at least one third component comprising one or more additive(s), wherein the temperature of the second and/or third component is adjusted before adding it/them to the mixing unitby cooling using a heat exchanger device.

The additive in particular, is an additive for controlling the chemical and/or physical properties of the curable binder composition. Preferably, the additive is selected from an accelerator, a retarder, a rheological aid and/or a superplasticizer. Particularly, the additive is an additive for mineral binder compositions.

It may be preferred to add the components of the curable binder composition to the mixing unit as separate feeds. However, it can also be preferred to form a premix of the third and/or any further component comprising one or more additive(s) with the first and/or the second component before adding them to the mixing unit. This can be helpful to obtain a more precise dosing of the additives, which usually are added with rather low proportions.

Preferably, the components of the curable binder composition are added to the mixing unit from containers each containing one component of the curable binder composition. The containers can be directly connected to the inlets of the mixing unit via one or more feed lines. However, in one or more preferred implementations, the components are added to the mixing unit using a feed device comprising individually controllable supply units, such as powder dosing device(s) and/or liquid dosing device(s), that enable a metered addition of the materials. If a feed device is used, it is preferably connected via the feed lines to the containers and to the inlets of the mixing unit via further feed line(s).

Thereby, the proportion of the first component particularly can be controlled with a first supply unit, for example with a powder dosing device. A powder dosing device may comprise a controllable valve and a balance for weighing the weight of powder introduced into the mixing unit.

Alternatively or in addition, the proportion of the second component, i.e., water, introduced to the mixing unit can be adjusted with another supply unit, for example, a controllable liquid dosing device. For example, the liquid dosing device comprises a valve with a flow meter to measure the amount of water introduced into the mixing unit.

Likewise, the proportion(s) of the third and/or any further component(s) added to the mixing unit can be adjusted with additional supply unit(s), for example, controllable liquid dosing device(s), particularly comprising a valve with a flow meter to measure the amount of additive introduced into the mixing unit.

However, it is also possible to add one or more of the components at a constant rate into the mixing unit, whereas the proportion(s) of the other component(s) is/are controlled as described above.

The temperature of the at least one of the second and third component of the curable binder composition before addition to the mixing unit can, therefore, be adjusted in the container of the component and/or in the feed line connecting the container to the feed device or mixing unit and/or in the further feed line connecting the feed device to the mixing unit.

The preferred type of the heat exchanger device used for adjusting the temperature of a component depends mainly on the arrangement, i.e., whether the heat exchanger device is arranged to a container or a feed line. Suitable heat exchanging devices for containers include, for example, coil heat exchangers and air- and water-cooled chillers.

Suitable heat exchanger devices to adjust the temperature of a component in a feed line include heat exchangers, especially double-pipe, shell-and-tube, and plate heat exchangers as well as thermoelectric coolers and heaters, particularly Peltier devices.

In a preferred implementation, the temperature of the second and/or third component before adding it to the mixing unit is adjusted using a heat exchanger arranged to a feedline connecting a container containing the component to mixing unit or a feed device.

According to one or more embodiments, one or more additives for controlling the chemical and/or physical properties of the setting curable binder composition is/are added to the setting curable binder composition in the printing head and/or in the supply line.

These one or more additive(s) can be the same as the one or more additive(s) comprised in the optional third and/or any further component described above, or they are different.

Thus, in this case, the additive is added to the curable binder composition in setting state downstream the mixing unit. This allows, for example, for adjusting the properties of the curable binder composition right before application, for example, in the printing head.

Thereby, for example, the consistency and/or rheology of the curable binder composition can be adjusted for proper extrusion and/or layer buildup.

The additive preferably is a substance capable of controlling and/or modifying the flow properties and/or the setting behavior of the curable binder composition. Preferably, the additive is selected from an accelerator, a retarder, a rheological aid and/or a superplasticizer. Particularly, the additive is an additive for mineral binder composition.

According to one more embodiments, the temperature of the at least one additive is adjusted before adding to the printing head and/or to the supply line, preferably by cooling, using a heat exchanger device.

Particularly, the at least one additive is added to the printing head and/or the supply line via an additive supply device, optionally with an additive inlet nozzle. Furthermore, the additive supply device is preferably connected to an additive reservoir via an additive feed line. The additive supply device and/or the additive inlet nozzle preferably are controllable, particularly with the control unit.

The temperature of the additive can then be adjusted in the additive reservoir and/or the additive feed line.

The preferred type of the heat exchanger device depends mainly on the arrangement, i.e., whether the heat exchanger device is arranged to the additive reservoir or to the additive feed line. Suitable heat exchanger devices for containers and feed lines have already been discussed above in the context of the temperature control of the second and third components of the curable binder composition.

In a preferred implementation, the temperature of the at least one additive before adding to the to the printing head and/or to the supply line is adjusted using a heat exchanger arranged to an additive feed line connecting an additive supply device to an additive reservoir.

According to one or more embodiments, the method comprises the steps of:
- Before application by means of the printing head, mixing the curable binder composition in the setting state with at least one dynamic mixer comprising a drive and a stirring element coupled to the drive.

In the at least one dynamic mixer, the stirring element is configured for mechanically mixing the curable binder composition, and optionally the one or more additive(s). The stirring element comprises for example one or more stirring shaft(s) and/or stirring blade(s).

Particularly, the at least one dynamic mixer is arranged between a printing head outlet, especially an outlet nozzle, and the end of the section of the supply line in which the pump has been arranged. Especially, the at least one dynamic mixer is arranged between the printing head outlet, especially an outlet nozzle, and the additive supply device, if the latter is present. Particularly preferred, the at least one dynamic mixer is arranged in the printing head.

According to one or more embodiments, the temperature of the curable binder composition in the mixing unit and/or of at least one of the second and third component of the curable binder composition before adding it/them into the mixing unit (10) is adjusted by cooling such that the temperature of the curable binder composition in the printing head and/or in the printing head outlet is within a pre-determined range of target values for the temperature. This can be done manually and/or automatically.

Especially preferred, the temperature of the curable binder composition in the mixing unit is automatically adjusted by cooling with a control unit such that the temperature of the curable binder composition in the printing head and/or in the printing head outlet is within a pre-determined range of target values for the temperature.

A pre-determined range of target values is preferably stored in the memory module of the control unit. The pre-determined range of target temperature values in particular comprises at least a lower limit and an upper limit. These limits may be identical. In this case the pre-determined range of target values equal a single pre-determined temperature value.

Automatically adjusting the temperature by cooling of the curable binder composition in the mixing unit is preferably effected with a control loop with one or more control elements, such as a control device for a heat exchanger device, for example, arranged to the mixing unit, which control elements are controlled based on the measured temperature of the curable binder composition in the printing head.

The control loop may for example be implemented in the form of a proportional-integral controller (PI controller) or in the form of a proportional-integral-derivative controller (PID controller).

In this way, the temperature of the curable binder composition in setting state in the printing head can be automatically held constant within desired ranges.

A further aspect of the present invention is directed to a system for producing a three-dimensional object from a curable binder composition with an additive manufacturing process having means adapted to execute the steps of the method as described above.

A system for producing a three-dimensional object from a curable binder composition with an additive manufacturing process, especially for performing the method as described above, is as claimed in claim 6.

Features described above in connection with the inventive method are preferably implemented likewise in the inventive system.

Especially, the system comprises one or more containers for the components of the curable binder composition produced in the mixing unit. The containers are especially connected to the inlets of the mixing unit via one or more feed lines.

Furthermore, the system preferably contains a feed device comprising one or more individually controllable supply units, especially one or more powder dosing device(s) and/or one or more liquid dosing device(s). A powder dosing device may comprise a controllable valve and a balance for weighing the weight of powder introduced into the mixing unit. For example, the liquid dosing device comprises a valve with a flow meter to measure the amount of liquid, for example water, introduced into the mixing unit. The one or more supply unit(s) are controllable, preferably with the below described control unit.

In a further preferred embodiment, the system further comprises:
- an additive supply device, optionally with an additive inlet nozzle, arranged in the printing head and/or in the supply line upstream the printing head, which additive supply unit is configured to add one or more additives to the curable binder composition in the setting state.

Furthermore, the additive supply device is preferably connected to an additive reservoir via an additive feed line. The additive supply device and/or the additive inlet nozzle preferably are controllable, particularly with the below described control unit.

According to one or more embodiments, the system further comprises:
- at least one heat exchanger device configured to adjust the temperature of the one or more additives before adding it/them into the printing head (3) and/or into the supply line (12).

According to one or more embodiments, the system further comprises:
- at least one dynamic mixer comprising a drive and a stirring element coupled to the drive for mixing the curable binder composition in the setting state before application with the printing head.

The stirring element preferably comprises for example one or more stirring shaft(s) and/or stirring blade(s).

Especially, the system comprises a control unit for controlling the additive manufacturing process of the three-dimensional object. The control unit preferably comprises a processor module, a memory module for storing data and one or more interface module(s) especially for sending and/or receiving data to/from individual components of the system, especially to/from the measuring unit(s), the heat exchanger devices, the constituent supply device(s), the additive supply device, the dynamic mixer, the printing head and/or the movement device for moving the printing head.

Preferably, the memory module comprises a memory area in which a three-dimensional model of the three-dimensional object to be manufactured and/or target values are stored.

According to one or more embodiments, the control unit is configured to:
- adjust the proportion of the constituents of the curable binder composition in the mixing unit by controlling one or more of the constituent supply device(s) and
- optionally, adjust the proportion of the additive in the setting curable binder composition by controlling the additive supply device.

The control unit is configured to automatically cool the curable binder composition in the mixing unit and/or at least one of the second and third component of the curable binder composition before adding it/them into the mixing unit such that:
- the temperature of the curable binder composition in the printing head is within a pre-determined range of target values for the temperature.

The target values for the temperature are preferably stored in the memory module of the control unit.

Another aspect of the present invention is directed to a computer program comprising instructions to cause the system as described above to execute the method as described above. The computer program may for example be present on a portable data carrier, stored on a computer system, stored on a server and/or stored in a control unit of an additive manufacturing device.

Further advantageous implementations of the invention are evident from the exemplary embodiments.

### Brief description of the drawings

The drawings used to explain the embodiments show:

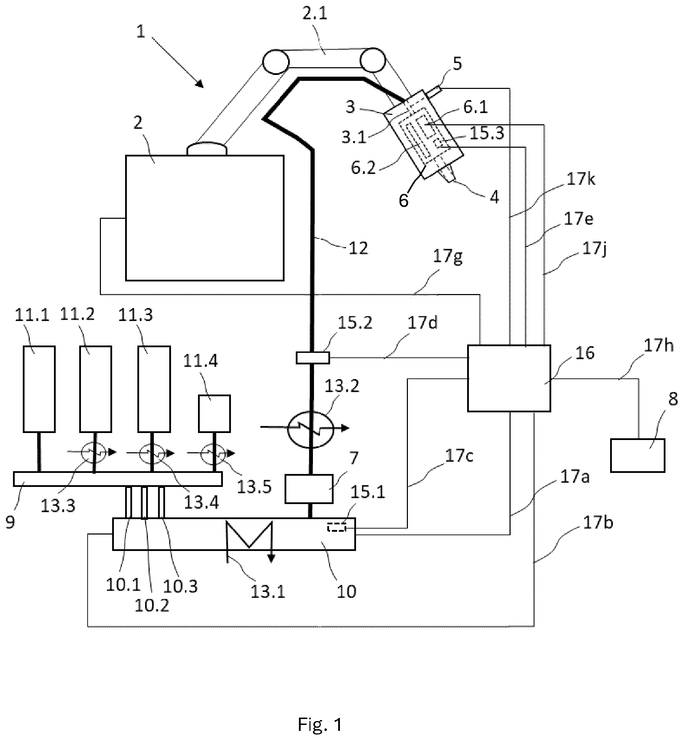

Fig. 1 An exemplary system for producing a three-dimensional object from a curable binder composition with an additive manufacturing process.

### Exemplary embodiments

### Method and system for additive manufacturing

Fig. 1 schematically shows an exemplary system 1 for producing a three-dimensional object from a curable binder composition with an additive manufacturing process.

The system 1 comprises a movement device 2 with a movable arm 2.1. A printing head 3 is attached to the free end of the arm 2.1, which can be moved by the arm 2.1 in all three spatial dimensions. Thus, the printing head 3 can be moved to any position in the working area of the movement device 2.

Inside, the printing head 3 has a tubular passage 3.1 passing through from the end face facing the arm 2.1 (at the top in Fig. 1) to the opposite and free end face. The tubular passage 3.1 is configured for conveying a curable binder composition. At the free end, the passage 3.1 opens into a printing head outlet 4, preferably a controllable outlet, especially a controllable nozzle.

The printing head 3 comprises an additive supply device 5 consisting of a pump and an inlet nozzle, which opens into passage 3.1. Through the inlet nozzle of the additive supply device 5, an additive, for example a rheological aid or an accelerator, can be added to the curable binder composition flowing through the passage 3.1. Optionally, the printing head 3 may comprise supply devices for adding one or more further additives.

Furthermore, inside the printing head 3, downstream with respect to the additive supply device 5, a dynamic mixer 6 is arranged in the passage 3.1, which additionally mixes the curable binder composition and the additive. The dynamic mixer comprises a drive unit 6.1, which is configured for powering a stirring shaft 6.2 for mechanically mixing the curable binder composition and the additive.

The system 1 for applying a curable binder composition also has a feed device 9 which is connected on the input side to three containers 11.1, 11.2, 11.3 and an additive reservoir 11.4 via feed lines. Each of the three containers 11.1, 11.2, 11.3 contains one component of the curable binder material. The first component, which is present in the first container 11.1, is for example a dry mineral binder composition, for example a cement or a dry mortar. The second component, which is present in the second container 11.2, consists of water, for example. The third component present in the third container 11.3 is, for example, a superplasticizer in the form of a polycarboxylate ether. The additive reservoir 11.4 contains, for example, a rheological aid and/or accelerator, for example modified cellulose and/or a microbial polysaccharide.

On the output side, the feed device 9 has three separate outlets, each of which is connected to one of three inlets 10.1, 10.2, 10.3 of a mixing unit 10. The feed device 9 also contains individually controllable component supply devices, for example powder dosing device(s) and/or one or more liquid dosing devices (not shown in Fig. 1), so that the individual components in the individual containers 11.1, 11.2, 11.3 can be individually fed into the mixing unit 10 in a controlled manner.

The powder dosing device for example comprises a controllable valve and a balance for weighing the weight of powder introduced into the mixing unit 10. A liquid dosing device for example comprises a valve with a flow meter to measure the amount of water or plasticizer introduced into the mixing unit

A further outlet (not shown in Fig. 1) of the feed device 9 is connected to the additive supply device 5, so that an additive can be introduced from the additive reservoir 11.4 to the additive supply device 5 via a further feed line (not shown in Fig. 1).

The feedlines connecting the containers 11.2 and 11.3 to the feed device 9 are equipped with heat exchanger devices 13.3 and 13.4 to cool the second and/or third component of the curable binder material before feeding them to the mixing unit 10. The feedline connecting the additive reservoir 11.4 to the feed device 9 also contains a heat exchanger device 11.4 to adjust the temperature of the additive before feeding it to the mixing unit 10 and/or to the printing head 3.

The mixing unit 10 is designed as a dynamic mixer and comprises, in addition thereto, an integrated conveying device in the form of a screw conveyor. In the mixing device, the individually metered components are mixed together and conveyed into the flexible supply line 12 attached to the outlet side of the mixing unit 10. In operation, the mixing and conveying of the curable binder composition can take place continuously.

The curable binder composition in the setting state can be conveyed into the printing head 3 via the flexible supply line 12, which opens into the tubular passage 3.1, and continuously applied through the printing head outlet 4.

Another heat exchanger 13.1 is arranged to the mixing unit 10 to adjust the temperature of the curable binder composition before feeding it to the flexible supply line 12. The heat exchanger device 13.1 preferably comprises a jacket surrounding at least a portion of the mixing unit. The jacked can comprise inner and outer walls enclosing a plurality of canals for a heat exchanging medium and at least one inlet and outlet for the heat exchanging medium, for example a liquid.

For conveying the curable binder composition in the setting state via a supply line 12 to a printing head 3, the system further comprises a pump 7, with which the curable binder composition can be conveyed to the printing head 3 via the supply line 12.

A heat exchanger device 13.2 is arranged to the supply line, in the vicinity of the pump 7, to adjust the temperature of the curable binder composition in the setting state before feeding it to the printing head 3 (which is not claimed). The heat exchanger device 13.2 is preferably a shell and tube heat exchanger or a tubular heat exchanger, preferably a double tube heat exchange.

Furthermore, there are temperature sensors 15.1, 15.2, and 15.3 integrated in the mixing unit 10, the supply line 12, and the printing head 3, respectively.

A central control unit 16 of the system 1 includes a processor module, a memory module, and a plurality of interfaces for receiving data and a plurality of interfaces for controlling individual devices of the system 1.

In this regard, the mixing unit 10 is connected to the control unit 16 via a first control line 17a, while the feeding device 9 is connected to the control unit 16 via a second control line 17b. As a result, the individual components in the containers 11.1, 11.2, 11.3 can be metered into the mixing unit 10 via the control unit 16 in accordance with predetermined recipes stored in the control unit 16 and the thus obtained curable binder composition in the setting state can be conveyed into the supply line 12 at an adjustable conveying rate.

The additive supply device 5 is connected to the control unit 16 via a separate control line 17k and can be controlled or monitored by the control unit 16.

The movement device 2 is also connected to the control unit 16 via a further control line 17g. This means that the movement of the printing head 3 can be controlled via the control unit 16.

Similarly, the temperature measuring devices 15.1, 15.2, and 15.3 are connected to the control unit 16 by control lines 17c, 17d, and 17e so that data recorded in the temperature measuring devices 15.1, 15.2, and 15.3 can be transmitted to the control unit 16.

The dynamic mixer 6 in the printing head 3 can be controlled via control line 17j.

The heat exchanger devices 13.1, 13.2, 13.3, 13.4, and 13.5 are connected to the control unit 16 by control lines (not shown in Fig. 1).

Furthermore, the control unit 16 is connected via control line 17h with an interface unit 8 having a user interface that allows for controlling the system 1 and displaying data.

The control unit 16 is thereby configured, for example, in such a way that:
(i) a curable binder composition in setting state is continuously produced in the mixing unit 10 based on a recipe stored in the memory module of the control unit 16;
(ii) while conveying the curable binder composition in setting state through the supply line 12 and applying it with the printing head 3 for producing a three-dimensional object based on a data model stored in the memory module of the control unit 16, the temperature of the curable binder composition in the mixing unit 10, in the supply line 12, and in the printing head 3 is determined with the temperature measuring devices 15.1, 15.2, and 15.3;
(iii) With a control loop implemented in the control unit 16, for example a PID controller, the heat exchanger devices 13.1, 13.2 (not claimed), 13.3, 13.4, and 13.5 are controlled:
   - such that the curable binder composition in the mixing unit 10 is cooled and/or
   - such that at least one of the second and third component of the curable binder composition is cooled before adding it/them into the mixing unit 10 and/or
   - such that the temperature of an additive before adding it into the supply line 12 and/or into the printing head 3 is adjusted,
   in order to keep the temperature of the curable composition in the printing head 3 constant or within a range of target values for temperature stored in the memory module of the control unit 16;
(iv) the movement device 2, and thus the position of the printing head 3, is controlled as a function of a model of the object to be produced stored in the memory module of the control unit 16;
(vi) In case of a malfunction, for example if the control loop(s) is/are not able to set the desired target value(s), an alert is provided to a user via the interface module 8 and/or the system is stopped.

## Claims

1. A method for producing a three-dimensional object from a curable binder composition with an additive manufacturing process, the method comprising the steps of:
- Producing the curable binder composition in the setting state, preferably by mixing the components of the curable binder composition in a mixing unit (10),
- Conveying the curable binder composition in the setting state via a supply line (12) to a printing head (3) movable in at least one spatial direction,
- Applying the curable binder composition in the setting state by means of the printing head (3), wherein the curable binder composition is preferably applied layer-by-layer, to form the three-dimensional object,
- Determining a temperature of the curable binder composition in the mixing unit (10) and/or in the supply line (12) and/or in the printing head (3) and/or in a printing head outlet (4),
- Adjusting the temperature of the curable binder composition in the mixing unit (10) by cooling using a heat exchanger device (13.1) arranged to the mixing unit (10) and/or
- Adjusting the temperature of at least one of the components of the curable binder composition before adding it/them into the mixing unit (10) wherein the curable binder composition comprises a first component comprising mineral binder and aggregate, a second component comprising water, and optionally at least one third component comprising one or more additive(s), wherein the temperature of at least one of the second and third component is adjusted before adding it/them to the mixing unit (10) by cooling using a heat exchanger device (13.3, 13.4),
- Optionally adding an additive for controlling the chemical and/or physical properties of the setting curable binder composition to the setting curable binder composition in the printing head (3) and/or in the supply line (12), and
- Optionally adjusting the temperature of the additive before adding it to the printing head (3) and/or the supply line (12).

2. The method according to claim 1, wherein, when a heat exchanger device (13.1) is arranged to the mixing unit (10), it comprises a metallic jacket that surrounds at least a portion of the mixing unit (10).

3. The method according to any one of previous claims, wherein an additive for controlling the chemical and/or physical properties of the setting curable binder composition is added to the setting curable binder composition in the printing head (3) and/or in the supply line (12).

4. The method according to claim 3, wherein the temperature of the additive is adjusted before adding it to the printing head (3) and/or to the supply line (12) using a heat exchanger device (13.5).

5. The method according to any one of previous claims comprising further step of:
- Before application by means of the printing head, mixing the curable binder composition in the setting state with at least one dynamic mixer (6) comprising a drive (6.1) and a stirring element (6.2) coupled to the drive (6.1).

6. A system (1) for producing a three-dimensional object from a curable binder composition with an additive manufacturing process, wherein the curable binder composition comprises a first component comprising mineral binder and aggregate, a second component comprising water, and optionally at least one third component comprising one or more additive(s), especially for performing the method according to any of claims 1 - 5, the system comprising:
- a mixing unit (10) for mixing the components of the curable binder composition to provide a curable binder composition in the setting state,
- a printing head (3) movable in at least one spatial direction with a movement device (2) for forming the three-dimensional object comprising a printing head outlet (4), preferably a controllable outlet,
- a supply line (12) for supplying the curable binder composition in the setting state to the printing head (3),
- at least one temperature measuring device (15.1, 15.2, 15.3) configured to determine the temperature of the curable binder composition in the mixing unit (10) and/or in the supply line (12) and/or in the printing head (3) and/or in the printing head outlet (4),
**characterised in that** it further comprises:
- at least one heat exchanger device (13.1) configured to cool the curable binder composition in the mixing unit (10) and/or
- at least one heat exchanger device (13.3, 13.4) configured to cool at least one of the second and third component before adding it/them into the mixing unit (10).

7. The system according to claim 6, further comprising:
- an additive supply device (5) arranged in the printing head (3) and/or in the supply line (12) upstream the printing head (3), which additive supply device (5) is configured to add one or more additives to the curable binder composition in the setting state.

8. The system according to claim 7 further comprising:
- at least one heat exchanger device (13.5) configured to adjust the temperature of the one or more additives before adding it/them into the printing head (3) and/or into the supply line (12).

9. The system according to any one of claims 6-8 further comprising:
- at least one dynamic mixer (6) comprising a drive (6.1) and a stirring element (6.2) coupled to the drive (6.1) for mixing the curable binder composition in the setting state before application with the printing head (3).

10. The system according to any of claims 6 - 9 further comprising at least one control unit (16) configured to automatically cool the curable binder composition in the mixing unit (10) and/or at least one of the second and third component of the curable binder composition before adding it/them into the mixing unit (10) such that:
- the temperature of the curable binder composition in the printing head (3) and/or in the printing head outlet (4) is within a pre-determined range of target values for the temperature.

11. A computer program comprising instructions to cause the system of any of claims 6 - 10 to execute the steps of the method of claim 1 - 5.

## Patentansprüche

1. Verfahren zum Herstellen eines dreidimensionalen Objekts aus einer härtbaren Bindemittelzusammensetzung mit einem additiven Fertigungsverfahren, wobei das Verfahren die folgenden Schritte umfasst:
- Herstellen der härtbaren Bindemittelzusammensetzung in abbindendem Zustand, vorzugsweise durch Mischen der Komponenten der härtbaren Bindemittelzusammensetzung in einer Mischeinheit (10),
- Befördern der härtbaren Bindemittelzusammensetzung in abbindendem Zustand über eine Zuführleitung (12) zu einem in mindestens einer Raumrichtung bewegbaren Druckkopf (3),
- Applizieren der härtbaren Bindemittelzusammensetzung in abbindendem Zustand mit dem Druckkopf (3), wobei die härtbare Bindemittelzusammensetzung vorzugsweise schichtweise aufgebracht wird, um das dreidimensionale Objekt zu bilden,
- Bestimmen einer Temperatur der härtbaren Bindemittelzusammensetzung in der Mischeinheit (10) und/oder in der Zuführleitung (12) und/oder im Druckkopf (3) und/oder in einem Druckkopfauslass (4),
- Einstellen der Temperatur der härtbaren Bindemittelzusammensetzung in der Mischeinheit (10) durch Abkühlen mit einer an der Mischeinheit (10) angeordneten Wärmetauschervorrichtung (13.1) und/oder
- Einstellen der Temperatur von mindestens einer der Komponenten der härtbaren Bindemittelzusammensetzung vor der Zugabe derselben in die Mischeinheit (10), wobei die härtbare Bindemittelzusammensetzung eine erste Komponente, die mineralisches Bindemittel und Aggregat umfasst, eine zweite Komponente, die Wasser umfasst, und gegebenenfalls mindestens eine dritte Komponente, die ein oder mehrere Additive umfasst, umfasst, wobei die Temperatur der zweiten und/oder dritten Komponente vor der Zugabe zur Mischeinheit (10) durch Kühlen unter Verwendung einer Wärmetauschervorrichtung (13.3, 13.4) eingestellt wird,
- gegebenenfalls Zugeben eines Additivs zur Steuerung der chemischen und/oder physikalischen Eigenschaften der abbindenden härtbaren Bindemittelzusammensetzung zu der abbindenden härtbaren Bindemittelzusammensetzung im Druckkopf (3) und/oder in der Zuführleitung (12), und
- gegebenenfalls Einstellen der Temperatur des Additivs vor der Zugabe zum Druckkopf (3) und/oder zur Zuführleitung (12).

2. Verfahren nach Anspruch 1, wobei dann, wenn eine Wärmetauschervorrichtung (13.1) an der Mischeinheit (10) angeordnet ist, sie einen metallischen Mantel umfasst, der mindestens einen Teil der Mischeinheit (10) umgibt.

3. Verfahren nach einem der vorhergehenden Ansprüche, wobei ein Additiv zum Steuern der chemischen und/oder physikalischen Eigenschaften der abbindenden härtbaren Bindemittelzusammensetzung der abbindenden härtbaren Bindemittelzusammensetzung im Druckkopf (3) und/oder in der Zuführleitung (12) zugegeben wird.

4. Verfahren nach Anspruch 3, wobei die Temperatur des Additivs vor der Zugabe zum Druckkopf (3) und/oder zu der Zuführleitung (12) unter Verwendung einer Wärmetauschervorrichtung (13.5) eingestellt wird.

5. Verfahren nach einem der vorhergehenden Ansprüche, das ferner folgenden Schritt umfasst:
- Mischen der härtbaren Bindemittelzusammensetzung in abbindendem Zustand vor der Applikation mit dem Druckkopf mit mindestens einem dynamischen Mischer (6), der einen Antrieb (6.1) und ein mit dem Antrieb (6.1) gekoppeltes Rührelement (6.2) umfasst.

6. System (1) zum Herstellen eines dreidimensionalen Objekts aus einer härtbaren Bindemittelzusammensetzung mit einem additiven Fertigungsverfahren, wobei die härtbare Bindemittelzusammensetzung eine erste Komponente, die mineralisches Bindemittel und Aggregat umfasst, eine zweite Komponente, die Wasser umfasst, und gegebenenfalls mindestens eine dritte Komponente, die ein oder mehrere Additive umfasst, umfasst, insbesondere zum Durchführen des Verfahrens nach einem der Ansprüche 1 - 5, wobei das System Folgendes umfasst:
- eine Mischeinheit (10) zum Mischen der Komponenten der härtbaren Bindemittelzusammensetzung zur Bereitstellung einer härtbaren Bindemittelzusammensetzung in abbindendem Zustand,
- einen in mindestens einer Raumrichtung bewegbaren Druckkopf (3) mit einer Bewegungsvorrichtung (2) zur Bildung des dreidimensionalen Objekts, umfassend einen Druckkopfauslass (4), vorzugsweise einen steuerbaren Auslass,
- eine Zuführleitung (12) zum Zuführen der härtbaren Bindemittelzusammensetzung in abbindendem Zustand zum Druckkopf (3),
- mindestens eine Temperaturmessvorrichtung (15.1, 15.2, 15.3), ausgebildet zum Bestimmen einer Temperatur der härtbaren Bindemittelzusammensetzung in der Mischeinheit (10) und/oder in der Zuführleitung (12) und/oder im Druckkopf (3) und/oder im Druckkopfauslass (4),
**dadurch gekennzeichnet, dass** es ferner Folgendes umfasst:
- mindestens eine Wärmetauschervorrichtung (13.1), ausgebildet zum Kühlen der härtbaren Bindemittelzusammensetzung in der Mischeinheit (10) und/oder
- mindestens eine Wärmetauschervorrichtung (13.3, 13.4), ausgebildet zum Kühlen der zweiten und/oder dritten Komponente vor deren Zugabe in die Mischeinheit (10) .

7. System nach Anspruch 6, das ferner Folgendes umfasst:
- eine im Druckkopf (3) und/oder in der Zuführleitung (12) vor dem Druckkopf (3) angeordnete Additivzuführvorrichtung (5), wobei die Additivzuführvorrichtung (5) zum Zugeben eines oder mehrerer Additive zu der härtbaren Bindemittelzusammensetzung in abbindendem Zustand ausgebildet ist.

8. System nach Anspruch 7, das ferner Folgendes umfasst:
- mindestens eine Wärmetauschervorrichtung (13.5), ausgebildet zum Einstellen der Temperatur des einen oder der mehreren Additive vor deren Zugabe in den Druckkopf (3) und/oder in die Zuführleitung (12).

9. System nach einem der Ansprüche 6-8, das ferner Folgendes umfasst:
- mindestens einen dynamischen Mischer (6) mit einem Antrieb (6.1) und einem mit dem Antrieb (6.1) gekoppelten Rührelement (6.2) zum Mischen der härtbaren Bindemittelzusammensetzung in abbindendem Zustand vor der Applikation mit dem Druckkopf (3).

10. System nach einem der Ansprüche 6-9, ferner umfassend mindestens eine Steuereinheit (16), ausgebildet zum automatischen Kühlen der härtbaren Bindemittelzusammensetzung in der Mischeinheit (10) und/oder der zweiten und/oder dritten Komponente der härtbaren Bindemittelzusammensetzung vor deren Zugabe in die Mischeinheit (10) derart, dass:
- die Temperatur der härtbaren Bindemittelzusammensetzung im Druckkopf (3) und/oder im Druckkopfauslass (4) innerhalb eines vorgegebenen Sollwertbereichs für die Temperatur liegt.

11. Computerprogramm, umfassend Anweisungen zum Bewirken, dass das System nach einem der Ansprüche 6 - 10 die Schritte des Verfahrens nach Anspruch 1 - 5 ausführt.

## Revendications

1. Procédé pour la production d'un objet tridimensionnel à partir d'une composition de liant durcissable avec un procédé de fabrication additive, le procédé comprenant les étapes de :
- production de la composition de liant durcissable en prise, de préférence par mélange des composants de la composition de liant durcissable dans une unité de mélange (10),
- transport de la composition de liant durcissable en prise par une conduite d'alimentation (12) jusqu'à une tête d'impression (3) mobile dans au moins une direction de l'espace,
- application de la composition de liant durcissable en prise au moyen de la tête d'impression (3), la composition de liant durcissable étant de préférence appliquée couche par couche, pour former l'objet tridimensionnel,
- détermination d'une température de la composition de liant durcissable dans l'unité de mélange (10) et/ou dans la conduite d'alimentation (12) et/ou dans la tête d'impression (3) et/ou dans une sortie de tête d'impression (4),
- ajustement de la température de la composition de liant durcissable dans l'unité de mélange (10) par refroidissement à l'aide d'un dispositif échangeur de chaleur (13.1) agencé à l'unité de mélange (10) et/ou
- ajustement de la température d'au moins un des composants de la composition de liant durcissable avant de l'ajouter ou les ajouter dans l'unité de mélange (10), dans lequel la composition de liant durcissable comprend un premier composant comprenant un liant minéral et des granulats, un deuxième composant comprenant de l'eau, et éventuellement au moins un troisième composant comprenant un ou plusieurs additifs, la température d'au moins l'un parmi le deuxième et le troisième composant étant ajustée avant de l'ajouter ou les ajouter dans l'unité de mélange (10) par refroidissement à l'aide d'un dispositif échangeur de chaleur (13.3, 13.4),
- éventuellement ajout d'un additif pour réguler les propriétés chimiques et/ou physiques de la composition de liant durcissable en prise à la composition de liant durcissable en prise dans la tête d'impression (3) et/ou dans la conduite d'alimentation (12), et
- éventuellement ajustement de la température de l'additif avant de l'ajouter dans la tête d'impression (3) et/ou la conduite d'alimentation (12).

2. Procédé selon la revendication 1, dans lequel, lorsqu'un dispositif échangeur de chaleur (13.1) est agencé à l'unité de mélange (10), il comprend une enveloppe métallique qui entoure au moins une partie de l'unité de mélange (10).

3. Procédé selon l'une quelconque des revendications précédentes, dans lequel un additif pour réguler les propriétés chimiques et/ou physiques de la composition de liant durcissable en prise est ajouté à la composition de liant durcissable en prise dans la tête d'impression (3) et/ou dans la conduite d'alimentation (12).

4. Procédé selon la revendication 3, dans lequel la température de l'additif est ajustée avant de l'ajouter dans la tête d'impression (3) et/ou la conduite d'alimentation (12) à l'aide d'un dispositif échangeur de chaleur (13.5).

5. Procédé selon l'une quelconque des revendications précédentes comprenant l'étape supplémentaire de :
- avant application au moyen de la tête d'impression, mélange de la composition de liant durcissable en prise avec au moins un mélangeur dynamique (6) comprenant un entraînement (6.1) et un élément d'agitation (6.2) couplé à l'entraînement (6.1).

6. Système (1) pour la production d'un objet tridimensionnel à partir d'une composition de liant durcissable avec un procédé de fabrication additive, dans lequel la composition de liant durcissable comprend un premier composant comprenant un liant minéral et des granulats, un deuxième composant comprenant de l'eau, et éventuellement au moins un troisième composant comprenant un ou plusieurs additifs, notamment pour la mise en œuvre du procédé selon l'une quelconque des revendications 1 à 5, le système comprenant :
- une unité de mélange (10) pour le mélange des composants de la composition de liant durcissable pour fournir une composition de liant durcissable en prise,
- une tête d'impression (3) mobile dans au moins une direction de l'espace comportant un dispositif de mise en mouvement (2) pour former l'objet tridimensionnel comportant une sortie de tête d'impression (4), de préférence une sortie régulable,
- une conduite d'alimentation (12) pour fournir la composition de liant durcissable en prise à la tête d'impression (3),
- au moins un dispositif de mesure de la température (15.1, 15.2, 15.3) configuré pour déterminer la température de la composition de liant durcissable dans l'unité de mélange (10) et/ou dans la conduite d'alimentation (12) et/ou dans la tête d'impression (3) et/ou dans la sortie de tête d'impression (4),
**caractérisé en ce qu'**il comprend en outre :
- au moins un dispositif échangeur de chaleur (13.1) configuré pour refroidir la composition de liant durcissable dans l'unité de mélange (10) et/ou
- au moins un dispositif échangeur de chaleur (13.3, 13.4) configuré pour refroidir au moins l'un parmi le deuxième et le troisième composant avant de l'ajouter ou les ajouter dans l'unité de mélange (10).

7. Système selon la revendication 6, comprenant en outre :
- un dispositif d'alimentation en additif (5) agencé dans la tête d'impression (3) et/ou dans la conduite d'alimentation (12) en amont de la tête d'impression (3), lequel dispositif d'alimentation en additif (5) est configuré pour ajouter un ou plusieurs additifs à la composition de liant durcissable en prise.

8. Système selon la revendication 7 comprenant en outre :
- au moins un dispositif échangeur de chaleur (13.5) configuré pour ajuster la température du ou des additifs avant de l'ajouter ou les ajouter dans la tête d'impression (3) et/ou dans la conduite d'alimentation (12).

9. Système selon l'une quelconque des revendications 6 à 8 comprenant en outre :
- au moins un mélangeur dynamique (6) comprenant un entraînement (6.1) et un élément d'agitation (6.2) couplé à l'entraînement (6.1) pour mélanger la composition de liant durcissable en prise avant application avec la tête d'impression (3).

10. Système selon l'une quelconque des revendications 6 à 9 comprenant en outre au moins une unité de régulation (16) configurée pour refroidir automatiquement la composition de liant durcissable dans l'unité de mélange (10) et/ou au moins l'un parmi le deuxième et le troisième composant de la composition de liant durcissable avant de l'ajouter ou les ajouter dans l'unité de mélange (10) de sorte que :
- la température de la composition de liant durcissable dans la tête d'impression (3) et/ou dans la sortie de tête d'impression (4) se trouve dans une plage prédéterminée de valeurs cibles pour la température.

11. Programme informatique comprenant des instructions pour amener le système selon l'une quelconque des revendications 6 à 10 à exécuter les étapes du procédé selon les revendications 1 à 5.
